Europäisches Patentamt

European Patent Office

Office européen des brevets

(19)

(11) **EP 1 514 846 A1**

(12) ## EUROPEAN PATENT APPLICATION

(43) Date of publication:
**16.03.2005 Bulletin 2005/11**

(51) Int Cl.7: **C01G 23/047**, C01G 23/07,
C01B 33/113, B01J 19/08

(21) Application number: **04255466.7**

(22) Date of filing: **09.09.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **11.09.2003 US 502148**

(71) Applicant: **E. I. du Pont de Nemours and Company
Wilmington, Delaware 19805 (US)**

(72) Inventor: **Zhang, Lu
Newark, Delaware, 19711 (US)**

(74) Representative: **Towler, Philip Dean
Frank B. Dehn & Co.
179 Queen Victoria Street
London EC4V 4EL (GB)**

(54) **Plasma synthesis of metal oxide nanoparticles**

(57)    A process for minimizing and even eliminating over-sized particles in a vapor phase synthesis of metal oxide-containing particles comprising reacting oxygen with one of more vapor streams comprising a titanium halide, a silicon halide and a compound selected from the group consisting of phosphorus, germanium, boron, tin, niobium, chromium, silver, gold, palladium aluminum, and mixtures thereof in a plug flow, plasma reactor.

FIG. 1

**Description**

FIELD OF THE INVENTION

The present invention relates to a method for making metal oxide-containing particles, particularly nanoparticles and more particularly titanium dioxide-containing nano-sized particles.

BACKGROUND OF THE INVENTION

Scientific and commercial potential of nanoparticle materials currently attracts much attention. This fact is true in the case of nanoparticle titanium dioxide. Methods of making nanoparticle titanium dioxide include methods such as colloidal precipitation, mechanical grinding and vapor phase synthesis.

Vapor phase synthesis offers advantages over both colloidal precipitation and mechanical processes, but vapor phase synthesis (sometimes called an aerosol process) continues to face challenges in control of particle size distribution and degree of aggregation and agglomeration.

Various methods have been taught to control primary particle size and particle size distribution. For example, U.S. Pat. Nos. 5,935,293 and 5,749,937 to Detering et al., U.S. Pat. Nos. 5,788,738 and 5,851,507 to Pirzada et al., and U.S. Patent No. 5,935,293 to Rao et al., all teaching methods related to rapid quench or expansion of product gases. Applicant's own U.S. Application No. 60/434,158 teaches a flow homogenizing device that provides a nearly 1-dimensional flow and concentration profile in the reaction zone, and allows a relatively narrow size distribution of nano-sized particles to be obtained.

Other methods are related to the addition of dopants as a reactant in the oxidation process. For, example, U. S. Patent Publication No. 2001/001/0014396A1 to Tanaka et al. teaches the oxidation of a mixed pre-heated gas containing a titanium halide, a silicon halide and aluminum halide with a preheated oxygen containing gas to produce nanoparticle titanium dioxide.

The application WO 96/36441 to Kodas, et al. and U.S. 5,922,120 to Subramanian et al. teach methods of coating titanium dioxide pigment particles during the oxidation process in which the pigment particles are formed, but in each case the coating oxide precursor must be added after the formation of the titanium dioxide particle. Also, the titanium tetrachloride oxidation is carried out in a flame reactor. In U.S. 5,922,120, also, a titanium dioxide pigment particle coating process carried out in a flame reactor, in addition to silicon tetrachloride and an oxide precursor of boron, phosphorus, magnesium, niobium, germanium and mixtures of these are added along with the silicon tetrachloride to produce titanium particles that are uniformly coated with a layer of silica.

U.S. 5,698,177 to Pratsinis et al. and two research publications, Akhtar, K.M., et al, *Dopants in Vapor-phase Synthesis of Titania Powders* from *J. Am. Ceram. Soc.* **75** [12] 3408-16, (1992) and Vemury, S., et al, "Dopants in Flame Synthesis of Titania, from *J. Am. Ceram.* 78 [11] (1995) 2984, all teach a laminar diffusion flame reactor oxidation/ hydrolysis process for oxidation of titanium tetrachloride to titanium dioxide. While the two journal publications describe the effect of individual addition of chlorides of silicon, aluminum, phosphorus and boron, and oxychloride precursors of silica, aluminum, and tin, respectively, the patent suggests the use of the addition chloride precursors of silicon, phosphorus, germanium, boron, tin, niobium, chromium, silver, gold, palladium, aluminum, and mixtures thereof to lower particle size and narrow particle size distribution The reactor type taught in these publication is in no way similar to the plasma reactor of the present invention, and with respect to the effect of temperature on particle size distribution, in all cases these publications teach that lower flame temperatures and short residence times produce small primary particles and higher average surface areas. Thus, this art teaches away from the high temperature, plasma heat source used by the present inventor.

SUMMARY OF THE INVENTION

The present invention relates to a process for synthesis of nano-sized metal oxide-containing particles in a plasma reactor, the process comprising:

    (a) simultaneously feeding to the reactor an oxidizing agent and one or more reactant streams containing a metal halide, a silicon halide and a coarse tail control agent selected from the group consisting of a halide of phosphorus, germanium, boron, tin, niobium, chromium, silver, gold, palladium, aluminum, and mixtures thereof; and
    (b) contacting the reactant streams and the oxidizing agent with a plasma at a temperature sufficient to form metal oxide-containing nano-sized particles wherein the average dispersible particle size is below 100 nm in diameter and a minor proportion of the dispersible particles are above 200 nm in diameter.

The invention additionally relates to a vapor phase process for producing nano-sized particles containing as the major component titanium dioxide comprising simultaneously reacting in a plasma reactor a feed stream of oxidizing agent with the components of a vapor stream comprising titanium tetrachloride, silicon tetrachloride and a coarse tail control agent selected from the group consisting of a chloride or oxychloride of phosphorus, boron and aluminum and a mixture thereof.

The invention further relates to a process for improving dispersibility of metal oxide particles synthesized in a plasma reactor, the process comprising:

(a) simultaneously feeding to the reactor an oxidizing agent and one or more reactant streams containing a metal halide, a silicon halide and a coarse tail control agent selected from the group consisting of a halide of phosphorus, germanium, boron, tin, niobium, chromium, silver, gold, palladium, aluminum, and a mixture thereof; and

(b) contacting the reactant streams and the oxidizing agent with a plasma at a temperature sufficient to form metal oxide-containing particles having a unimodal particle size distribution.

BRIEF DESCRIPTION OF THE FIGURES

Figure 1 is a graph showing the effect of adding phosphorous trichloride on the resulting titanium dioxide particle size distribution.

Figure 2 is a graph showing the effect of adding boron trichloride on the resulting titanium dioxide particle size distribution.

Figure 3 is a graph showing the effect of adding aluminum trichloride on the resulting titanium dioxide particle size distribution.

Figure 4 is a simplified schematic flow diagram of the process of the present invention.

Figures 5A and 5B schematically shows the reaction chamber of Figure 4.

DETAILED DESCRIPTION

The present invention may be applied to any vapor phase, plug flow, inlet-fed reactor for the oxidation of metal halides to metal oxide powders. For example, in the case of titanium dioxide, the process of the present invention may also be applied to a plug flow, inlet-fed reactor process to improve the particle size characteristics of nano-sized particles, pigment particles or other size range of titanium dioxide where an increased surface area and improved dispersibility are of value.

The process is not restricted only to the oxidation of titanium tetrachloride. Metal halides and metal oxyhalides other than chlorides may serve as a starting material. Other metal oxides may also be made using the present process. Halides, particularly chlorides, selected from the group of consisting of titanium, zirconium, hafnium, silicon, and boron halides and mixtures of these halides are particularly suited to use in the present process. The present method may be used to produce nano-sized particles and particles of other size ranges.

The present invention relates to a vapor phase process for producing nano-sized particles containing as the major component titanium dioxide by simultaneously reacting a feed stream of oxidizing agent with the components of a vapor stream comprising titanium tetrachloride, silicon tetrachloride and a coarse tail control agent selected from the group consisting of a chloride or oxychloride of phosphorus, boron and aluminum or a mixture thereof in a plasma reactor.

By "major component" herein is meant greater than 50% by weight, preferably greater than 70% by weight, more preferably greater than 90% by weight.

As used herein, "nano-sized" or "nanoparticle" refers to a powder comprised of particles with an average particle size in the less than 100 nm range. Generally, the particle surface area of these particles is in the range of about 40 to about 150 $m^2/g$. Typically, by the process of this invention, particles can be made such that the primary particle size is below 100 nm in diameter. Primary particles form aggregates in the gas phase process. A major proportion of the aggregates are below 100 nm in diameter. A minor proportion of the aggregates are above 200 nm in diameter. By the term "minor proportion" it is meant that 0 to about 20 Vol.%, preferably 0 to about 15 Vol.%, more preferably 0 to about 5 Vol. % of the particles are above 200 nm in diameter, but it has been discovered that, with the present invention, the particle surface area of metal oxides made according to the present process is greater than the surface area resulting from a process without the addition of the silicon dioxide precursor and precursor of oxides of aluminum, boron, or phosphorus. In the case of titanium dioxide nano-sized particles, the average surface area may be increased to as much as about 100 to about 200 $m^2/g$ by the addition of the silicon oxide and another oxide of aluminum, boron, or phosphorus. Additionally and more importantly, the population of oversized, large particle aggregates is reduced by the present method.

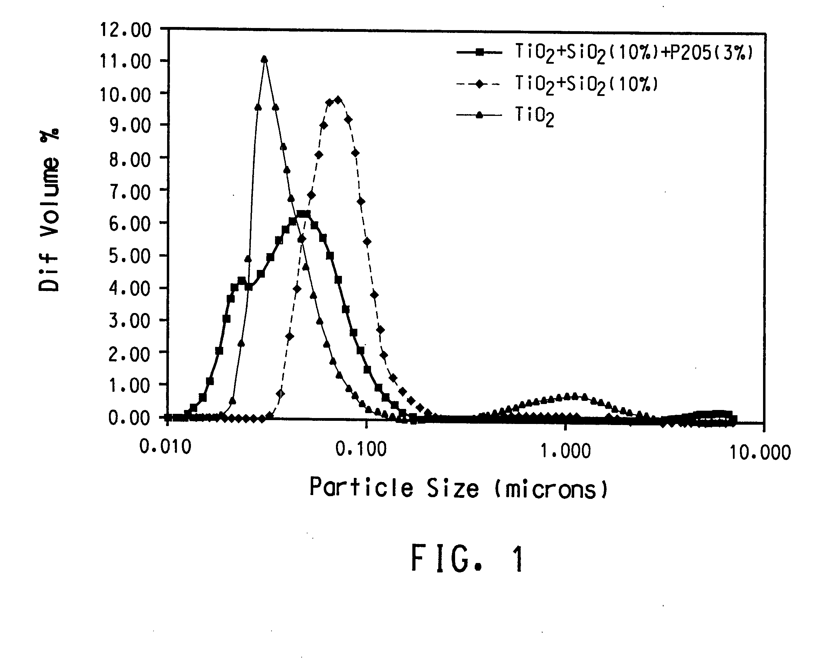

Oversized, coarse aggregates generally represent a second modality of the dispersible particle size distribution or the fraction of particle aggregates above a certain size. Figure 1 provides a typical dispersible particle size distribution of product made using the process of the present invention compared to a particle size distribution of a control (see the Examples, below). That is, particles were made in the same reactor and under the same reaction conditions, except there was no addition of additional chloride besides $TiCl_4$.

When the instant process is employed particles of substantially unimodal particle size distribution can be made such that the statistical distribution will have a single peak and any second peak, if present, will be very small. The vol.% of the second peak is below about 5%, preferably below about 2%, more preferably below about 0.5%. A completely unimodal particle size distribution is also considered possible.

Generally, the method described herein uses any convenient method to generate vapors of metal halides or metal oxyhalides so they can be fed through inlet port(s) into the reactor. If the metal halide or metal oxyhalide is a liquid at room temperature, the liquid can be held in a cylinder and a gas can be bubbled through the liquid with the resulting vapor carried into the line for subsequent injection through inlet port(s) into the reactor. If the metal halide is a gas at room temperature (e.g., boron trichloride), it can be added directly into the reactor, either neat or with a flow of carrier gas. Gases that may be used include inert gases (e.g., nitrogen, argon and the like), as well as oxygen. If an inert gas is used to bubble through the liquid metal halide or metal oxyhalide, oxygen will generally be added to that stream, as the presence of oxygen is necessary for the reaction to progress to form the desired oxides.

If the metal halide or metal oxyhalide is a solid at room temperature, it can be held in a chamber and subjected to heat so that sublimation or vaporization of the material can occur. The vapor produced is then combined with either an inert gas or oxygen and fed into the reactor via an injector port.

The metal halides or metal oxyhalides can each be fed into the reactor through separate injector ports, or combined before the injector ports so that the same mixture is fed through each port. For example, in the reactor used for the examples below, there were three equally spaced radially-distributed injector ports, which were all at the same horizontal level. The $TiCl_4$ and $SiCl_4$ vapors were mixed together, and then combined with boron trichloride or phosphorus trichloride vapors before injection through the three ports. Because aluminum trichloride is a solid at room temperature, that vapor stream was added separately through one port, while the $TiCl_4$ and silicon tetrachloride mixed vapors were added through the other two ports.

The reactor used in present process is a plug flow, inlet-fed reactor. The term "inlet-fed" as used herein means that at least one reactant is injected through an inlet into a reaction zone as a gas or vapor or liquid aerosol. Injection via an inlet can be designed to ensure that there is turbulent mixing in the reaction zone. Various mixtures of gases that do not react with one another in advance of entering the reaction zone may be injected through a common reactor inlet port. Also, the geometry of one or more inlets with respect to the other inlets, flow rates of reactants or reactants mixed with carrier gasses, and number of inlets may be varied to create the conditions for desired turbulent mixing in the reactor.

The energy source in the present system is a plasma; energy is delivered to the reaction zone and the reactants via the hot plasma gas. The reactants and inert gas flow through the reaction zone and down through the reaction chamber. Upon reaction solid particles are formed by vapor phase reaction followed by nucleation, condensation and coagulation. Methods known in the art may be used to quench the reaction and collect the product particles.

In spite of the fact that there is much art in the field of oxidizing titanium tetrachloride to form titanium dioxide particles, the plasma oxidation system is unique in the field. Plasma oxidation, as well known in the art, is characterized by very high temperatures, in the case of the argon plasma at least 6000 degrees Celsius, and by very short residence times often less than five milliseconds. Such temperature conditions are sufficient to form metal oxides in the process of the instant invention. Reactants are usually propelled into the reaction zone through radial inlets to ensure that mixing is turbulent. The plasma reaction system is limited by the rate of mixing. And, there are some authorities that believe that plasma systems may be limited by the actual reaction kinetics. That is, that the reactant species energy level is so high and the residence time so short that some reaction common at low temperatures (1500-1600 degrees C) may not take place at all or may proceed by mechanisms and through intermediates that are unknown at these low temperatures. In view of these observations, low temperature reactions, processes and products would not be expected to be predictive of plasma systems reactions, processes or products.

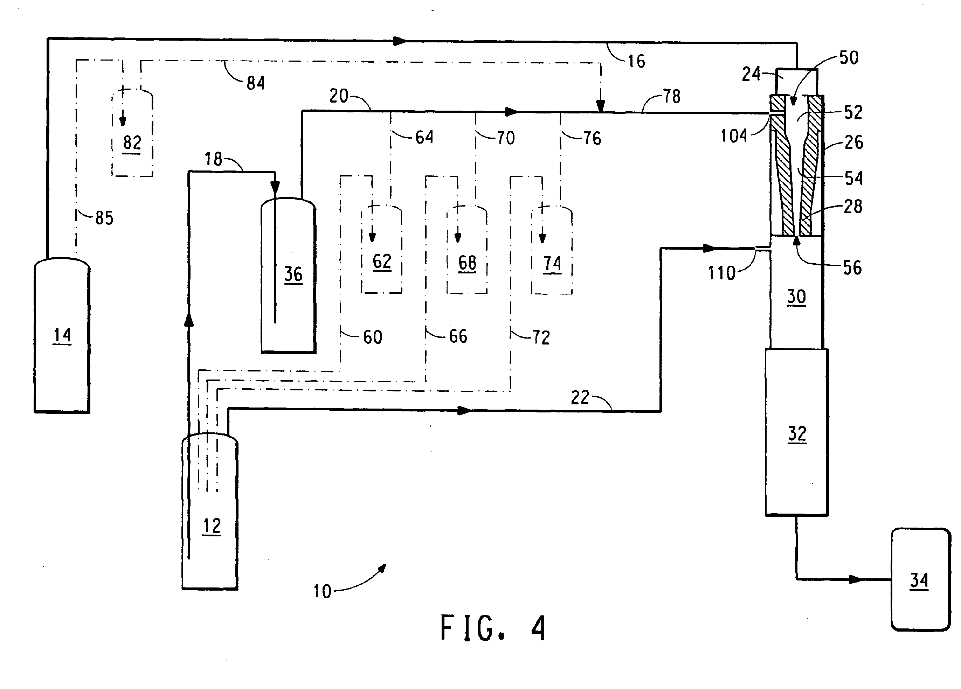

The reactor specifics are not critical so long as the reactor is a plug flow reactor. An inlet-fed plug flow type reactor is preferred. In the Examples below the reactor configuration of U.S. Patent Application 60/434,158 was used. This is shown in Figure 4.

Thus referring to Figure 4, the carrier gas is the gas or gas mixture that enters the reactor chamber via 16. The carrier gas may be a mixture of an inert gas and at least one reactant. For example, in the use of the present invention to make $TiO_2$ nanoparticles, the carrier gas may be argon alone or a mixture of argon and oxygen, or any inert gas or inert gas and oxygen. In the present invention the term "reactant inlets" are a means to introduce at least one reactant into the reaction chamber. The reactant may be mixture of one or more reactant gases or vapors with or without an inert gas, where reactants include at least one or a mixture of reaction agent compounds that are required to make the desired product. It is essential for achieving the desired particle size distribution that no reaction be initiated between the reactants before the reaction components enter the reaction chamber. A preferred inert gas is argon.

The reaction chamber of the present invention comprises a wall, an inlet and an outlet, the inlet for introducing a hot carrier gas to the reaction chamber, and the hot carrier gas flows from the inlet through the reaction chamber and out the outlet. It can further comprise a homogenizer which provides the spacer zone and the homogenization zone. The homogenizer can be made of any suitable material, with copper or ceramic materials being preferred.

A feature of this invention is a reaction chamber that is used in a high temperature aerosol reactor for the controlled synthesis of nanoparticles. This reaction chamber promotes near one-dimensional flow and concentration profiles by enhanced mixing of the reactants and carrier gas as these gases flow down stream through the spacer zone, the homogenization zone, and into the quench zone. The reaction chamber can be used with very small pressure gradients.

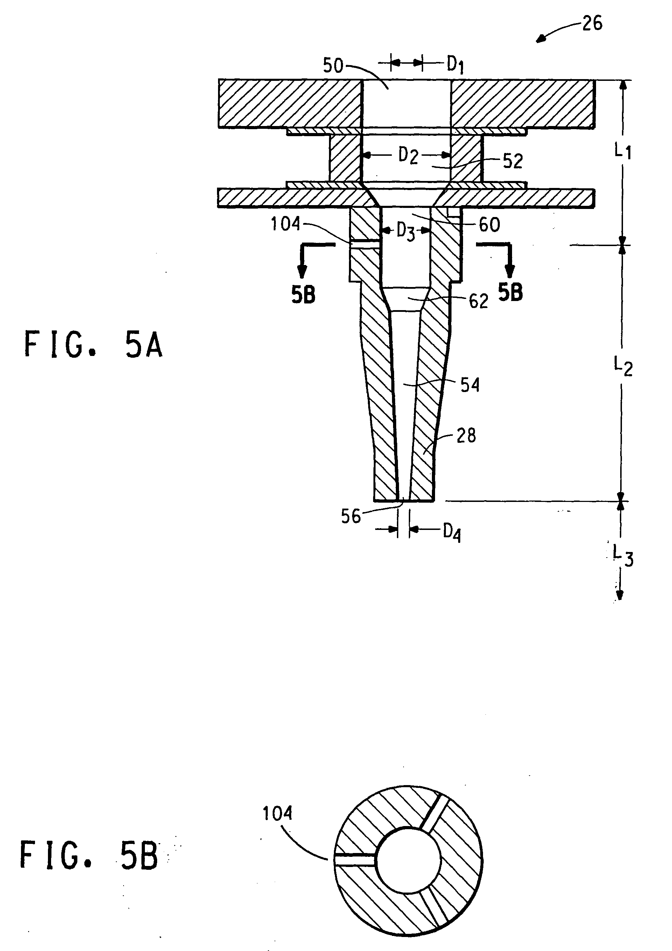

Throughout the Figures herein, recurring elements are designated with by the same number and symbol. A plasma reactor system according to the present invention (a nanoparticle generating reactor or aerosol reactor) 10 is schematically shown in Fig. 4. The reaction chamber 26 is schematically shown in Fig. 5A.

In Figure 1, the reactor consists of a high temperature energy source 24, reaction chamber 26 (also shown in Fig. 5), quenching chamber 30 and product collector 32. Each of these regions of the reactor chamber can be cooled by fluid circulating within the walls of the reactor chamber (not shown). The preferred cooling fluid for use in the present invention is water.

In a preferred embodiment, the energy source **24** is a DC arc plasma torch. As shown in Figure 4, the carrier gas is supplied from tank **14** through line 16 to the energy source **24**. The heating source is also cooled by a cooling fluid circulation through a cooling jacket (not shown). The preferred coolant is water. The reaction chamber of the present invention comprises a wall **28,** an inlet **50** and an outlet **56,** the inlet for introducing a hot carrier gas to the reaction chamber, and the hot carrier gas flows from the inlet through the reaction chamber and out the outlet. It further comprises a homogenizer which provides the spacer zone 52 and the homogenization zone **54**.

The reaction chamber may be made of any material of construction that is suitable for use in high temperature, oxidizing and/or corrosive environments. High purity alumina can be employed. It may be made of a material of construction that meets the following requirements: a good heat insulator; able to withstand temperatures that can be achieved using plasma heating; able to survive thermal shock; able to survive oxidizing and reducing environments depending on the application; and able to survive a corrosive environment. The homogenizer can be made of any suitable material, with ceramic materials being preferred.

The reactants consist of titanium tetrachloride, silicon tetrachloride, oxygen and other selected chloride from aluminum, phosphorus, or boron or mixtures of these. Titanium tetrachloride vapor is generated by bubbling oxygen housed in cylinder **12** through line **18** into liquid reactant $TiCl_4$ stored in cylinder **36.** Silicon tetrachloride vapor is generated by bubbling oxygen housed in cylinder **12** through line **60** into liquid reactant $SiCl_4$ stored in cylinder **62.** Phosphorus trichloride vapor is generated by bubbling oxygen housed in cylinder **12** through line **66** into liquid reactant $PCl_3$ stored in cylinder **68.** Boron trichloride vapor is generated by bubbling oxygen housed in cylinder **12** through line **72** into liquid reactant $BCl_3$ stored in cylinder **74.** $AlCl_3$ vapor is generated by heating a cylinder **82** containing $AlCl_3$ solid above its sublimation temperature and the subsequent vapor is carried by Ar gas stored in cylinder **14** through line **84** to inlet **104.** When $AlCl_3$ is not used, the vapors of $TiCl_4$ **20** and $SiCl_4$ **64** are mixed with the selected vapor of $PCl_3$ **70** or $BCl_3$ **76** or mixtures of these outside of the reactor. The combined mixture of all the reactants are injected through line **78** into the reaction chamber through inlet **104** (preferably three equally-spaced radial inlets which provide entry to the flow homogenizer through three radial ports). When $AlCl_3$ is used, the mixture of $TiCl_4$ and $SiCl_4$ vapor are injected through two of the three radial ports and $AlCl_3$ vapor carried by Ar enters through the other port.

On entering the reaction chamber and contacting the hot carrier gas flow from the energy source, the reaction is initiated and continues as the reactants flow downstream toward reaction chamber exit **56,** and into the quench zone, into the quenching chamber **30,** where quenching gas **22** from tank **12** is radially introduced into the the quench chamber through inlets **110**. Additionally, the temperature of the aerosol stream is reduced by mixing with the quenching gas. As a result the rates of particle coagulation and aggregation are reduced. Further downstream the particles are collected in the product collector **32.** In the present example, a sintered metal filter is used to collect the product, although any suitable collection device, made of a suitable material, could be used. The gas flow exiting the filter is discharged into a scrubber **34.** In one embodiment of this process, primary particles in the sub-50 nm range are formed with the reaction chamber.

As shown in Figure 5A, the reaction chamber consists of two zones. A zone between the hot gas inlet **50,** having diameter $D_1$, and one or more reactant inlets **104** in the spacer zone **52,** having an upper diameter $D_2$, converging to a lower diameter $D_3$ at the reactant inlets, and has length $L_1$. The region between the reactant inlets **104** and the quench chamber **56** inlet is the homogenization zone **54,** having length $L_2$. The spacer zone length $L_1$ must be long enough to have the hot gas flow attached before reaching the reactant inlets. The flow detachment is caused by expanding the hot gas into the spacer region as a free jet, thus inducing flow recirculation. The optimal length of the spacer zone is dependent on the temperature and flow rate of the hot gas, the hot gas inlet **50** with diameter $D_1$ and the diameter of the reactant inlet region 60 $D_3$. Making the spacer zone any longer is at the expense of wasting high temperature energy. The homogenization zone has an initial tubular region followed by a first converging section **62**. The homogenizer is designed to have a minimum residence time so that the following tasks are completed before the gas flow exiting the homogenizer: (1) creation of one-dimensional flow and concentration profile; (2) initiation of gas-phase nucleation. This serves as the base of determining the length of the homogenization zone $L_2$, and the diameters $D_3$ and $D_4$, the diameter of the entrance to the quench chamber. Therefore, the dimensions are calculated based on the reaction rate, rate of mixing induced by diffusion and turbulence and nucleation rate. Increasing the flow residence time by increasing the volume of the homogenization zone for fixed flow rate is not advantageous. Once the nuclei are formed the aerosol stream should be quenched immediately so that the particle growth by coagulation and coalescence can be reduced as the temperature decreases. Therefore, a minimum length for the homogenization zone is preferred. Experimentation or calculation may determine the optimal length of the zone with respect to the particular product desired and the process conditions.

In Figure 5A, an optional straight extension section of length $L_3$ is not shown which may be added to the end of the reaction chamber at 56 to adjust final product properties. The length of this zone, $L_3$, does not seem critical. The extended zone may be needed for achieving the desired taper for the inlet tip or for mechanical reasons, for example.

The term "attached" or "attachment" with respect to fluid flow refers to a region where, in moving perpendicular from the boundary wall into the bulk of the fluid, the flow parallel to the boundary does not change sign (that is, the flow parallel to the boundary is moving in the same direction, varying only in amplitude). The term "separated" with respect to fluid flow refers to a region where, in moving perpendicular from the boundary wall into the bulk of the fluid, the flow parallel to the boundary changes sign. The zone between "separated" flow and "attached" flow is referred as the "stagnation point" and represents a singular solution to the boundary layer fluid equation.

The reactant(s) are injected directly radially into the reaction chamber. Figure 4 illustrates one inlet **104** and Figure 5B, a cross-section of the reaction chamber inlet, illustrates three equally-spaced radially-distributed inlets. It is preferable to have multiple inlets.

A high temperature energy source **(24)** is employed in the present invention. Non-limiting examples of the energy source for heating means employed include Direct Current (DC) arc plasma, Radio Frequency (RF) plasma, electric heating, conductive heating, flame reactor and laser reactor. Particularly useful means in the present invention are DC arc plasma and RF plasma.

A reactant stream **(20)** is employed in the present invention. The stream can be in liquid, solid, vapor, emulsion, dispersion, solution or powder form, or any combination thereof. Non-limiting examples of feed materials include solid particles carried by an inert gas, a reactant gas or combination thereof; a solid precursor positioned inside the heating zone; liquid droplets carried by an inert gas, a reactant gas or combination thereof; vapor phase precursor carried by an inert gas or reactant gas or combination thereof, wherein the vapor phase precursor is a suspension of solid particles and liquid droplets that are generated by an auxiliary apparatus and fed into the apparatus and process of the current invention. Sizes of particles and liquid droplets may be of any useful size.

The shape and dimension of the reaction chamber can be predetermined by both experiment and modeling in order to obtain the desired fluid dynamics feature.

A reactant inlet **(104)** is comprised of a tube, and is employed in the present invention. This tube can be made of any material of construction that can survive a corrosive environment, or any other environment determined by the reactants. Preferably the diameter of the tube is small enough so that high velocities of the reactants are achieved, thereby allowing the reactants to penetrate into the high temperature plasma. The diameter of the tube is determined by the flow rate and desired turbulence.

At the end of the reactor chamber, room temperature oxygen is introduced radially into the quenching chamber, and is, therefore, shorter than the time the material spends in the high temperature zone of the reactor. Therefore, the reaction goes to completion before exiting the high temperature zone and entering the quench zone, after which the product particles are separated and collected. Any convenient collection means can be used, with a sintered metal filter being one example thereof. Other non-limiting examples of collection means include cyclone collectors, baghouse collectors, collection in solution with subsequent filtering and drying, and the like.

The examples and figures shown below describe the present invention. Titanium dioxide can be produced by a number of processes, but in order to make nano-sized particles, a reactor with a flow homogenizer is preferred, as described in the method of commonly-owned and co-pending U.S. Appln. No. 60/434,158. While the titanium dioxide generally produced by this method has an average particle size distribution in the nano-size range (less than about 100 nm), an amount of material is made that appears as a second modality in the particle size distribution. This second modality is also known as "coarse tail". This second modality is shown on the graphs in Figures 1, 2 and 3, as a relatively small peak around at around 1 micron, although any material greater than about 200 nm is considered to be part of this second modality. The material represented by this peak is generally unacceptable for the desired end-uses of the titanium dioxide formed.

It has been discovered that the addition of small amounts of certain metal halides to the nano-size titanium dioxide product formed in the reactor significantly decreases the amount of relatively large particles, i.e., second modality. The Figures demonstrate this. The titanium dioxide line in Figure 1 shows the coarse tail formed when only $TiCl_4$ is oxidized. When silicon tetrachloride is added with the $TiCl_4$ feed and the mixture is oxidized in the reactor, the second mode does not appear, but the average particle size increases. When phosphorous trichloride is added through one of the ports of the reactor, the average particle size again decreases and there is substantially no second mode evident.

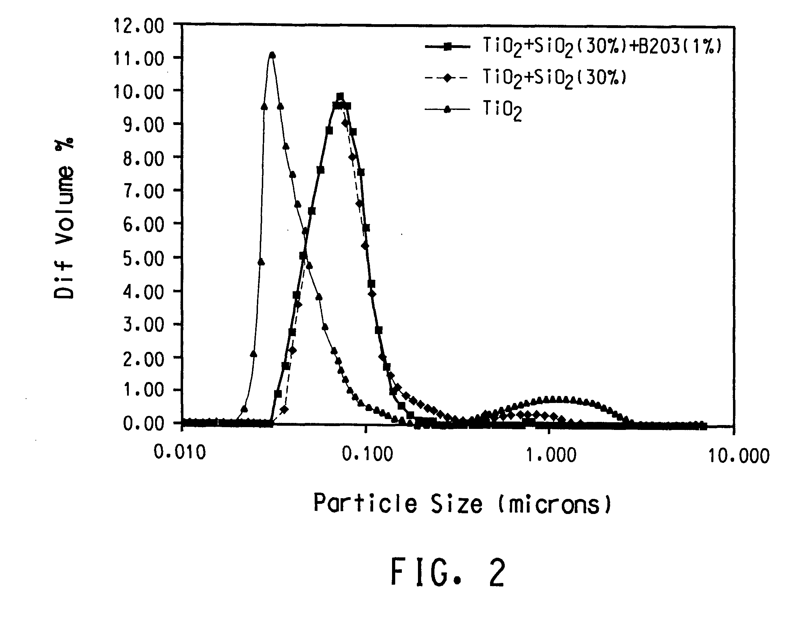

As shown in Figure 2, a similar phenomenon is seen when boron trichloride is seen. Again, oxidation of $TiCl_4$ alone shows a second mode, the addition of silicon tetrachloride and subsequent oxidation of the $TiCl_4$-$SiCl_4$ mixture to $TiO_2$-$SiO_2$ shows a relatively minor second modality, and the addition of boron trichloride substantially removes the rest of the second mode, and narrows and shifts the particle size distribution of the oxidized product.

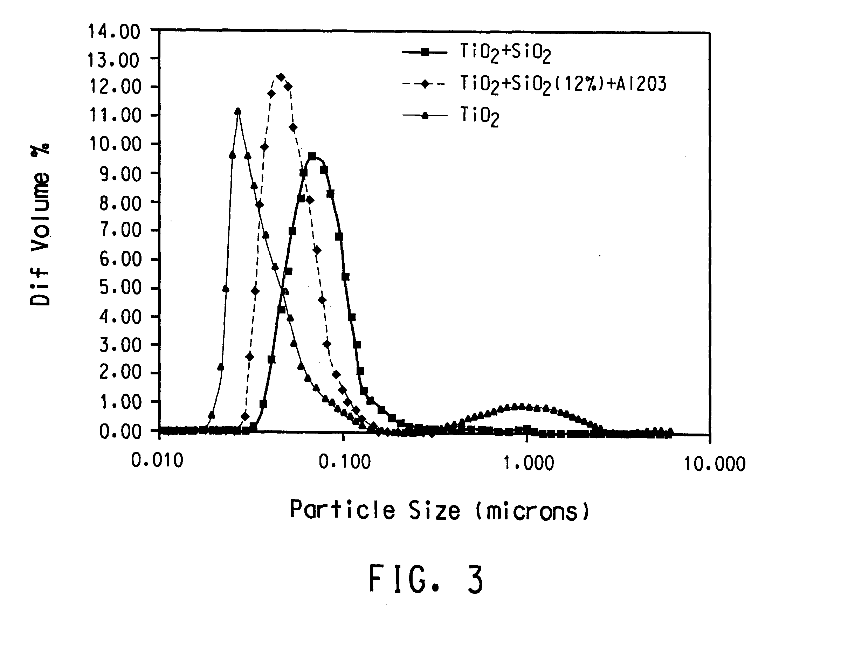

Figure 3 shows the results when aluminum trichloride is added to the $TiCl_4$-$SiCl_4$ mixture. The addition of silicon tetrachloride to the $TiCl_4$ produces material without second mode, but with a higher particle size distribution. The addition of aluminum trichloride with subsequent oxidation reduces the particle size distribution and substantially no second mode is apparent. The measured amount of second mode material is shown in Table 1, as the weight percent of material greater than 204 nm. Titanium dioxide nano-sized particles made according to the present invention may be used with advantage in various applications including sunscreen and cosmetic formulations; coatings formulations including automotive coatings, wood coatings, and surface coatings; chemical mechanical planarization products; catalysis products including photocatalysts used in water and air purification and selective catalytic reduction catalyst supports; resin products including plastic parts, films, and resin systems including agricultural films, food packaging films, molded automotive plastic parts, and engineering polymer resins; rubber based products including silicone rubbers; textile fibers, woven and nonwoven applications including polyamide, polyaramide, and polyimide fibers products and nonwoven sheets products; ceramics; glass products including architectural glass, automotive safety glass, and industrial glass; electronic components; and other uses. In using the titanium dioxide-containing particles in each application listed above, the titanium dioxide-containing nano-sized particles may be mix into base formulation using methods of equipment known in the art to achieve its desired properties and effects.

In one embodiment the invention can be construed as excluding any element or process step that does not materially affect the basic and novel characteristics of the composition or process. Additionally, the invention can be construed as excluding any element or process step not specified herein.

The following Examples are not intended to limit the present invention, but to illustrate at least some of the benefits of the present invention.


TEST METHODS


The analytical methods that are listed in Table 1 are BET surface area and UPA particle size distribution. These techniques are described in the following section.


BET surface area


The surface areas of powders and solids are calculated using the adsorption of nitrogen at its boiling point via the BET method, S. Brunauer, P. H. Emmett, and E. Teller, JACS 60, 309 (1938). A MICROMERITICS ASAP 2405 (a trademark of Micromeritics, Inc., Atlanta, GA) adsorption apparatus is used to measure the amount of nitrogen sorbed; the BET equation is used to calculate the amount of nitrogen corresponding to a monolayer for a given sample. Using an area of 16.2 $Å^2$ per nitrogen molecule under the sorption conditions, the surface area per gram of solid is calculated. Surface area standards from the National Institute of Standards & Technology are run to insure that the reported values are accurate to within a few percent. For non-porous solids (nearly spherical or cubical), the BET surface area can be compared with the size obtained from another technique (e.g. microscopic or particle size analysis). The relationship is

$$SA = \frac{6}{\rho * D}$$

where SA is the surface area in $m^2/g$, p the density in g/cc, and D the diameter in microns ($\mu m$). This relationship is exact for spheres and cubes. Therefore, the higher the surface area the smaller the particle size.


UPA particle size distribution


The MICROTRAC ULTRAFINE PARTICLE ANALYZER (UPA) (a trademark of Leeds and Northrup, North Wales, PA) uses the principle of dynamic light scattering to measure the particle size distribution of particles in liquid suspension. The measured size range is 0.003μm to 6μm (3nm to 6000nm). The dry particle sample needs to be prepared into a liquid dispersion to carry out the measurement. An example procedure is as follows:

(1) Weigh out 0.08g dry powder.
(2) Add 79.92g 0.1 % tetrasodium pyrophosphate (TSPP) solution in water to make a 0.1 wt.% suspension.
(3) Sonify the suspension for 10 minutes using an ultrasonic probe. The suspension should be cooled in a water-jacketed beaker during sonication.
(4) When sonication is complete, draw an aliquot for analysis.

EXAMPLES

Unless otherwise specified, all chemicals and reagents were used as received from Aldrich Chemical Co., Milwaukee, WI.

Example 1: $TiCl_4$ without flow homogenizer

$TiCl_4$ vapor was thoroughly premixed with oxygen by bubbling oxygen at a rate of 10 l/min through a cylinder maintained at room temperature that contains liquid $TiCl_4$. Ar was used as the plasma gas. The mixture of $TiCl_4$ and oxygen was then introduced into the reaction chamber through three equally spaced radial ports that were 0.02 cm in diameter. The reaction chamber was of cylindrical shape (2.52 cm in diameter, 7.56 cm in height). Titanium dioxide aerosol particles were formed by chemical nucleation as a result of the $TiCl_4$ oxidation reaction. At the end of the reaction chamber, room temperature oxygen was introduced radially into the quenching chamber at a rate of 30 l/min where the high temperature of the aerosol stream was lowered by mixing with room temperature quenching gas. The quenching chamber is of cylindrical shape (2.52 cm in diameter, 20.16 cm in height). Downstream from the quenching chamber, titanium dioxide particles were collected by a sintered metal filter. The properties of the resulting titanium dioxide particles are listed in Table 1.

Example 2: $TiCl_4$ with flow homogenizer

$TiCl_4$ vapor was thoroughly premixed with oxygen by bubbling oxygen at a rate of 10 l/min through a cylinder maintained at room temperature that contains liquid $TiCl_4$. Ar was used as the plasma gas. The mixture of $TiCl_4$ and oxygen was then introduced into the reaction chamber through three equally spaced radial ports that were 0.02 cm in diameter. The reaction chamber was of cylindrical shape (2.52 cm in diameter, 7.56 cm in height) and a flow homogenizer was held inside of the reaction chamber. Titanium dioxide aerosol particles were formed by chemical nucleation as a result of the $TiCl_4$ oxidation reaction. At the end of the reaction chamber, room temperature oxygen was introduced radially into the quenching chamber at a rate of 30 l/min where the high temperature of the aerosol stream was lowered by mixing with room temperature quenching gas. The quenching chamber is of cylindrical shape (2.52 cm in diameter, 20.16 cm in height). Downstream from the quenching chamber, titanium dioxide particles were collected by a sintered metal filter. The properties of the resulting titanium dioxide particles are listed in Table 1.

Example 3: $TiCl_4$ and $SiCl_4$

$TiCl_4$ vapor was thoroughly premixed with oxygen by bubbling oxygen at a rate of 10 l/min through a cylinder maintained at room temperature that contains liquid $TiCl_4$. Silicon tetrachloride vapor was thoroughly premixed with oxygen by bubbling oxygen at a rate of 0.3 l/min. The cylinder containing silicon tetrachloride was immersed in a NaCl-ice water bath that was maintained approximately at -12°C. Ar was used as the plasma gas. The stream containing $TiCl_4$ vapor and the stream containing silicon tetrachloride were mixed before they were introduced into the reaction chamber through three equally spaced radial ports that were 0.02 cm in diameter. The reaction chamber was of cylindrical shape (2.52 cm in diameter, 7.56 cm in height) and a flow homogenizer was held inside of the reaction chamber. Titanium dioxide and $SiO_2$ solid were formed by vapor phase reaction followed by nucleation, condensation and coagulation. As a result titanium dioxide nano-sized particles were coated with a layer of $SiO_2$ on the surface. At the end of the reaction chamber, room temperature oxygen was introduced radially into the quenching chamber at a rate of 30 l/min where the high temperature aerosol stream was lowered by mixing with the room temperature quenching gas. The quenching chamber is of cylindrical shape (2.52 cm in diameter, 20.16 cm in height). Downstream from the quenching chamber, titanium dioxide particles were collected by a sintered metal filter. The properties of the resulting titanium dioxide particles are listed in Table 1.

Example 4: TiCl$_4$, SiCl$_4$ and PCl$_3$

TiCl$_4$ vapor was thoroughly premixed with oxygen by bubbling oxygen at a rate of 10 l/min through a cylinder maintained at room temperature that contains liquid TiCl$_4$. Silicon tetrachloride vapor was thoroughly premixed with oxygen by bubbling oxygen at a rate of 0.3 l/min. The cylinder containing silicon tetrachloride was immersed in a NaCl-ice water bath that was maintained approximately at -12°C. Phosphorus trichloride vapor was thoroughly premixed with oxygen by bubbling oxygen at a rate of 0.1 l/min. The cylinder containing phosphorous trichloride was immersed in a NaCl-ice water bath that was maintained approximately at -12°C. Ar was used as the plasma gas. The streams containing TiCl$_4$, silicon tetrachloride and phosphorus trichloride vapor were mixed before they were introduced into the reaction chamber through three equally spaced radial ports that were 0.02 cm in diameter. The reaction chamber was of cylindrical shape (2.52 cm in diameter, 7.56 cm in height) and a flow homogenizer was held inside of the reaction chamber. Solid particles were formed by vapor phase reaction followed by nucleation, condensation and coagulation. At the end of the reaction chamber, room temperature oxygen was introduced radially into the quenching chamber at a rate of 30 l/min where the high temperature aerosol stream was lowered by mixing with the room temperature quenching gas. The quenching chamber is of cylindrical shape (2.52 cm in diameter, 20.16 cm in height). Downstream from the quenching chamber, titanium dioxide particles were collected by a sintered metal filter. The properties of the resulting titanium dioxide particles are listed in Table 1. The effect of adding phosphorus trichloride on the resulting particle size distribution is described in Figure 1.

Example 5: TiCl$_4$, SiCl$_4$ and BCl$_3$

TiCl$_4$ vapor was thoroughly premixed with oxygen by bubbling oxygen at a rate of 10 l/min through a cylinder maintained at room temperature that contains liquid TiCl$_4$. Silicon tetrachloride vapor was thoroughly premixed with oxygen by bubbling oxygen at a rate of 0.3 l/min. The cylinder containing silicon tetrachloride was immersed in a NaCl-ice water bath that was maintained approximately at -12°C. Boron trichloride vapor was thoroughly premixed with oxygen by bubbling oxygen at a rate of 0.1 l/min. The cylinder containing boron trichloride was immersed in a dry-ice acetone bath that was maintained approximately at -60°C. Ar was used as the plasma gas. The streams containing TiCl$_4$, silicon tetrachloride, and boron trichloride vapor were mixed before they were introduced into the reaction chamber through three equally spaced radial ports that were 0.02 cm in diameter. The reaction chamber was of cylindrical shape (2.52 cm in diameter, 7.56 cm in height) and a flow homogenizer was held inside of the reaction chamber. Solid particles were formed by vapor phase reaction followed by nucleation, condensation and coagulation. At the end of the reaction chamber, room temperature oxygen was introduced radially into the quenching chamber at a rate of 30 l/min where the high temperature aerosol stream was lowered by mixing with the room temperature quenching gas. The quenching chamber is of cylindrical shape (2.52 cm in diameter, 20.16 cm in height). Downstream from the quenching chamber, titanium dioxide particles were collected by a sintered metal filter. The properties of the resulting titanium dioxide particles are listed in Table 1. The effect of adding boron trichloride on the resulting particle size distribution is described in Figure 2.

Example 6: TiCl$_4$, SiCl$_4$ and AlCl$_3$

TiCl$_4$ vapor was thoroughly premixed with oxygen by bubbling oxygen at a rate of 10 l/min through a cylinder maintained at room temperature that contains liquid TiCl$_4$. Silicon tetrachloride vapor was thoroughly premixed with oxygen by bubbling oxygen at a rate of 0.3 l/min. The cylinder containing silicon tetrachloride was immersed in a NaCl-ice water bath that was maintained approximately at -12°C. Aluminum trichloride vapor was generated by heating aluminum trichloride solid, contained in a heating cell, to 126°C, and the resulting vapor was carried into the reactor by flowing Ar at 0.4 l/min. Ar was used as the plasma gas. The streams containing TiCl$_4$ and silicon tetrachloride vapor were mixed before they were introduced into the reaction chamber through two out of the three equally spaced radial ports that were 0.02 cm in diameter. The aluminum trichloride vapor was introduced through the third port. The reaction chamber was of cylindrical shape (2.52 cm in diameter, 7.56 cm in height) and a flow homogenizer was held inside of the reaction chamber. Solid particles were formed by vapor phase reaction followed by nucleation, condensation and coagulation. At the end of the reaction chamber, room temperature oxygen was introduced radially into the quenching chamber at a rate of 30 l/min where the high temperature aerosol stream was lowered by mixing with the room temperature quenching gas. The quenching chamber is of cylindrical shape (2.52 cm in diameter, 20.16 cm in height). Downstream from the quenching chamber, titanium dioxide particles were collected by a sintered metal filter. The properties of the resulting titanium dioxide particles are listed in Table 1. The effect of adding aluminum trichloride on the resulting particle size distribution is described in Figure 3.

Table 1

| | Examples | | | | | |
|---|---|---|---|---|---|---|
| | 1 | 2 | 3 | 4 | 5 | 6 |
| Weight % of $SiO_2$ | 0 | 0 | 9.3 | 10.9 | 31 | 12.7 |
| Other Oxide | | | | $P_2O_5$ | $B_2O_3$ | $Al_2O_3$ |
| Weight % of Other Oxide | 0 | 0 | 0 | 2.9 | 1 | 0.25 |
| Volume Mean Diameter (nm) | 97 | 37.6 | 86 | 42.3 | 68.2 | 51.4 |
| Volume % above 204 nm | 12.52 | 12.86 | 1.49 | 1.84 | 0.33 | 0.32 |
| Surface area ($m^2$/g) | 44.70 | 103.90 | 75.80 | 156 | 168 | 147 |
| Weight % of $SiO_2$ and other oxide measured by ICP Surface area measured by BET surface adsorption Volume mean diameter measured by UPA dynamic light scattering Volume % above 204 nm measured by UPA dynamic light scattering | | | | | | |

**Claims**

1. A process for synthesis of nano-sized metal oxide-containing particles in a plasma reactor, the process comprising:

   (a) simultaneously feeding to the reactor an oxidizing agent and one or more reactant streams containing a metal halide, a silicon halide and a coarse tail control agent selected from the group consisting of a halide of phosphorus, germanium, boron, tin, niobium, chromium, silver, gold, palladium, aluminum, and mixtures thereof; and
   (b) contacting the reactant streams and the oxidizing agent with a plasma at a temperature sufficient to form metal oxide-containing nano-sized particles wherein the average particle size is below 100 nm in diameter and a minor proportion of the particles are above 200 nm in diameter.

2. The process of Claim 1, further comprising separating the metal oxide-containing nano-sized particles formed in step (b).

3. The process of any one of the preceding claims wherein one or more of the metal halide, silicon halide or coarse tail control agent is a metal oxyhalide.

4. The process of any one of the preceding claims wherein the metal halide is titanium tetrachloride and the metal oxide is titanium dioxide.

5. The process of any one of the preceding claims wherein the silicon halide is silicon tetrachloride.

6. The process of any one of the preceding claims wherein the coarse tail control agent is selected from the group consisting of a halide of phosphorus, boron, aluminum and a mixture thereof.

7. The process of any one of the preceding claims wherein the reactant stream is fed into the reactor as a pre-mixed stream of the metal halide, the silicon halide and the coarse tail control agent.

8. A vapor phase process for producing nano-sized particles containing as the major component titanium dioxide comprising simultaneously reacting in a plasma reactor a feed stream of oxidizing agent with the components of a vapor stream comprising titanium tetrachloride, silicon tetrachloride and a coarse tail control agent selected from the group consisting of a chloride or oxychloride of phosphorus, boron and aluminum or a mixture thereof.

9. The process of any one of the preceding claims wherein the reactor comprises a spacer and homogenization zone.

10. A cosmetic formulation comprising nano-sized particles comprising titanium dioxide obtainable by the process as defined in Claim 4.

11. A coating comprising nano-sized particles comprising titanium dioxide obtainable by the process as defined in Claim 4.

12. The coating of Claim 11 wherein the coating is selected from the group consisting of wood, structural and automotive coatings.

13. A chemical mechanical planarization product comprising nano-sized particles comprising titanium dioxide obtainable by the process as defined in Claim 4.

14. A catalyst comprising nano-sized particles comprising titanium dioxide obtainable by the process as defined in Claim 4.

15. A resin product comprising nano-sized particles comprising titanium dioxide obtainable by the process as defined in Claim 4.

16. A glass product comprising nano-sized particles comprising titanium dioxide obtainable by the process as defined in Claim 4.

17. A process for improving dispersibility of metal oxide particles synthesized in a plasma reactor, the process comprising:

(a) simultaneously feeding to the reactor an oxidizing agent and one or more reactant streams containing a metal halide, a silicon halide and a coarse tail control agent selected from the group consisting of a halide of phosphorus, germanium, boron, tin, niobium, chromium, silver, gold, palladium, aluminum, and mixtures thereof; and
(b) contacting the reactant streams and the oxidizing agent with a plasma at a temperature sufficient to form metal oxide-containing particles having a substantially unimodal particle size distribution.

FIG. 1

FIG. 2

Particle Size (microns)

Diff Volume %

TiO$_2$+SiO$_2$(30%)+B2O3(1%)
TiO$_2$+SiO$_2$(30%)
TiO$_2$

10.000   1.000   0.100   0.010

12.00  11.00  10.00  9.00  8.00  7.00  6.00  5.00  4.00  3.00  2.00  1.00  0.00

FIG. 3

FIG. 4

FIG. 5A

FIG. 5B

European Patent Office

# EUROPEAN SEARCH REPORT

Application Number

EP 04 25 5466

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2003/143153 A1 (BOULOS MAHER I ET AL) 31 July 2003 (2003-07-31)<br>* paragraph [0025]; claims 1,3 *<br>* paragraph [0103] *<br>* paragraph [0059] *<br>* paragraph [0064] *<br>* paragraph [0066] *<br>* paragraph [0068] * | 1-17 | C01G23/047<br>C01G23/07<br>C01B33/113<br>B01J19/08 |
| X | US 2001/014396 A1 (TOMIKAWA SHINICHIRO ET AL) 16 August 2001 (2001-08-16)<br>* figure 1 *<br>* paragraphs [0045] - [0047] *<br>* claims 1,2 * | 1-17 | |
| A | US 3 449 072 A (FREEMAN MARK PHILLIPS) 10 June 1969 (1969-06-10)<br>* claims 1-7 * | 1-17 | |
| P,A | FR 2 839 506 A (SEROLE BERNARD ; SEROLE MICHELLE PAPARONE (FR)) 14 November 2003 (2003-11-14)<br>* claims 1-10 * | 1-17 | TECHNICAL FIELDS SEARCHED (Int.Cl.7)<br><br>C01G<br>C01B<br>B01J |

The present search report has been drawn up for all claims

| Place of search | Date of completion of the search | Examiner |
|---|---|---|
| Munich | 10 December 2004 | Arnotte, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 04 25 5466

This annex lists the patent family members relating to the patent documents cited in  the above-mentioned European search report.
The members are as contained in the European Patent Office EDP file on
The European Patent Office is in no way liable for these particulars which are merely  given for the purpose of information.

10-12-2004

| Patent document cited in search report | | Publication date | Patent family member(s) | | Publication date |
|---|---|---|---|---|---|
| US 2003143153 | A1 | 31-07-2003 | US | 2002155059 A1 | 24-10-2002 |
| | | | WO | 2004052778 A2 | 24-06-2004 |
| | | | WO | 02086179 A2 | 31-10-2002 |
| | | | CA | 2445169 A1 | 31-10-2002 |
| | | | EP | 1392604 A2 | 03-03-2004 |
| | | | JP | 2004527442 T | 09-09-2004 |
| US 2001014396 | A1 | 16-08-2001 | US | 2003162016 A1 | 28-08-2003 |
| | | | AU | 3057101 A | 14-08-2001 |
| | | | CN | 1398240 T | 19-02-2003 |
| | | | EP | 1256550 A1 | 13-11-2002 |
| | | | WO | 0156930 A1 | 09-08-2001 |
| US 3449072 | A | 10-06-1969 | NONE | | |
| FR 2839506 | A | 14-11-2003 | FR | 2839506 A1 | 14-11-2003 |
| | | | WO | 03095360 A1 | 20-11-2003 |

EPO FORM P0459

For more details about this annex : see Official Journal of the European Patent Office, No. 12/82